# EUROPÄISCHE PATENTSCHRIFT

(11) **EP 1 554 143 B1**
(45) Veröffentlichungstag und Bekanntmachung des Hinweises auf die Patenterteilung: **30.05.2012**
(21) Anmeldenummer: 03773518.0
(22) Anmeldetag: 13.10.2003
(51) Int. Cl.: B60J 7/02, B60J 7/19

(54) **CABRIOLET-FAHRZEUG**
CABRIOLET VEHICLE
VEHICULE CABRIOLET

(30) Priorität: 17.10.2002 DE 10248348; 17.10.2002 DE 10248349; 17.10.2002 DE 10248350; 28.08.2003 DE 20313456 U
(43) Veröffentlichungstag der Anmeldung: 20.07.2005
(73) Patentinhaber: Wilhelm Karmann GmbH, 49084 Osnabrück (DE)
(72) Erfinder: BUNSMANN, Winfried, 49143 Bissendorf (DE)
(74) Vertreter: Kronthaler, Schmidt & Coll.
(86) Internationale Anmeldenummer: PCT/DE2003/003400
(87) Internationale Veröffentlichungsnummer: WO 2004/037579

(56) Entgegenhaltungen:
- DE-A- 2 647 236
- DE-A- 19 936 252
- US-A- 1 986 048
- US-A- 2 768 025

## Beschreibung

Die Erfindung betrifft ein bewegliches Fahrzeugdach für ein Cabriolet-Fahrzeug nach dem Oberbegriff des Anspruchs 1 sowie ein Cabriolet-Fahrzeug nach Anspruch 21.

Aus der DE 40 04 871 A1 ist ein Faltverdeck für ein Cabriolet-Fahrzeug bekannt, bei dem zum Schließen des Daches ein Einlaufen der Dachspitze in eine Verriegelungsstellung an einem Windschutzscheibenrahmen mit einer horizontalen Bewegungskomponente vorgesehen ist. Diese Bewegungskomponente wird durch ein zusätzliches Kniehebelgestänge im hinteren Dachbereich bewirkt, was einen erheblichen zusätzlichen Fertigungsaufwand bedingt. Im abgelegten Zustand erfordert das Kniehebelgestänge einen zusätzlichen Raum, der dem Gepäckrum verlorengeht. Zudem ist eine derartige Lösung nicht auf ein Dach mit starren Dachteilen übertragbar. Eine Verriegelung der Dachspitze am Windschutzscheibenrahmen ist nach wie vor erforderlich, wodurch erheblicher Bauraum im Bereich der Dachspitze oder des Querholms des Windschutzscheibenrahmens benötigt wird. Dieses ist insofern kritisch, als bei modernen Cabriolet-Fahrzeugen der Windschutzscheibenrahmen häufig sehr flach steht und mit seinem Querholm über den Köpfen der Insassen befindlich ist. Daher ist zum Erhalt der Kopffreiheit, insbesondere auch zur Vermeidung von Verletzungsgefahren beim Ein- und Aussteigen sowie bei Unfällen, jegliche Einschränkung des Raumes in diesem Bereich zu vermeiden.

Die US 5,558,388 zeigt ein Cabriolet-Fahrzeug mit einem in sich geteilten Dach, bei dem ein horizontaler oberer Dachabschnitt gegen einen hinteren Dachteil verlagerbar ist und hierfür wieder Gestängeteile im oberen Kopfraumbereich der Insassen erfordert, was die o. g. Nachteile mit sich bringt.

Der Erfindung liegt das Problem zugrunde, ein bewegliches Fahrzeugdach und ein Cabriolet-Fahrzeug zu schaffen, mittels welchen eine optimierte mittelbare oder unmittelbare Halterung eines vorderen Dachbereichs am Windschutzscheibenrahmen ermöglicht ist.

Die Erfindung löst dieses Problem durch ein bewegliches Fahrzeugdach für ein Cabriolet-Fahrzeug mit den Merkmalen des Anspruchs 1 sowie durch ein Cabriolet-Fahrzeug mit den Merkmalen des Anspruchs 21. Hinsichtlich vorteilhafter Ausgestaltungen der Erfindung wird auf die weiteren Ansprüche 2 bis 20 verwiesen.

Erfindungsgemäß ist ein horizontales Einlaufen des gesamten Daches in die am Windschutzscheibenrahmen gehaltene Stellung einfach ermöglicht. Es sind keine mechanischen Hilfskonstruktionen erforderlich, die einzelne Teile des Daches gegeneinander verlagern müßten, sondern dieses ist insgesamt horizontal oder leicht schräg zu einer horizontalen Ebene über eine kurze Distanz beweglich.

Dabei ist eine Verschiebbarkeit eines ansonsten zu seinem Öffnen und Schließen insgesamt schwenkbaren Daches ermöglicht. Damit kann das Dach etwa auch zum Erreichen einer in Fahrzeuglängsrichtung geeigneten Stellung zum Ein- oder Ausfalten auch um eine größere Strecke verschoben werden und aus dieser Stellung dann zum Schließen an den Windschutzscheibenrahmen herangeführt werden. Die Antriebsorgane für die translatorische Verschiebung des gesamten Daches können dem Hauptlager zugeordnet sein und sich damit unterhalb einer Fensterbrüstungslinie in einem Raum befinden, der ohnehin für die Aufnahme des Hauptlagers genutzt wird und der deswegen hinsichtlich weiterer Nutzung unkritisch ist.

Mit der erfindungsgemäßen Lösung ist auch für ein ansonsten reines Schwenkverdeck oder über ein Mehrgelenk gehaltenes Verdeck die Verschiebbarkeit zwischen der geschlossenen Stellung und der zum Verschwenken geeigneten Zwischenstellung möglich.

Ein Verschiebeweg des Daches von nur wenigen Zentimetern ist mechanisch unkritisch, ein hierfür verwendetes Stellglied kann einfach und kompakt ausgebildet sein. Der Zeitaufwand zum Öffnen oder Schließen des Daches ist aufgrund des geringen Verschiebewegs nur minimal erhöht.

Bei einer verriegelungsfreien Halterung der Dachspitze am Windschutzscheibenrahmen kann in dem für den Kopfraum kritischen Bereich auf jegliche zusätzliche Bauelemente verzichtet werden. Die Verriegelung kann trotzdem zuverlässig über den Schwenklagern zugeordnete Maßnahmen erreicht werden. Zudem ist am vorderen Dachende, der den am weitesten vom Drehpunkt des Hauptlagers entfernten Bereich darstellt, das Gewicht gesenkt, wodurch die erforderliche Kraft zum Anheben des vorderen Dachendes gesenkt ist.

Insbesondere ist die Erfindung auch an einem Dach mit starren Dachteilen anwendbar.

Mit der vorteilhaften Ausbildung nach Anspruch 10 kann dabei ein die Heckscheibe umfassender Mittelbereich in einer von den seitlichen Hauptsäulen getrennten Lage abgelegt werden, wodurch das Packmaß des abgelegten Daches vermindert werden kann. Auch ohne eine aufwendige Drehmechanik kann die Heckscheibe gegenüber den seitlichen Hauptsäulen erhöht im Koffexraum oder Verdeckkasten abgelegt werden, so daß unterhalb dieser weiterer Stauraum entsteht.

Gleichzeitig ist durch die zusätzliche Abstützung auch in einer sog. Totpunktlage, in der die Drehpunkte der Gelenke auf einer Linie übereinanderliegen, ein Herunterkippen oder überschlagen des oder eines vorderen Dachteils nach hinten zwangsläufig verhindert.

Die zusätzliche Abstützung ist dabei zwingend nur in dieser Phase der Bewegung wirksam und kann daher mit großen Toleranzen versehen sein.

Vorteilhaft kann sie auch in weiteren Bewegungsphasen des Dachöffnens oder -schließens wirksam sein, wobei auch die jeweils an der Bewegung stützend beteiligten Bauteile bei hinreichender Elastizität der Teile und/oder ihrer Anbindungen während der Bewegung mehrfach wechseln können. Dies vereinfacht die Anforderungen bei der Herstellung der erfindungsgemäßen Fahrzeuge.

Das Freiluftgefühl auch bei geschlossenem Dach kann verbessert sein, wenn dem oberen Dachteil ein als Schiebedach wirkender Plattenkörper zugeordnet ist, der zu seiner Öffnung über den hinteren Dachteil verlagerbar ist. Insbesondere kann der Plattenkörper ebenfalls transparent sein.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: ein erfindungsgemäßes Cabriolet-Fahrzeug in schematischer, unten abgebrochener Seitenansicht bei geschlossenem Dach,
- Fig. 1a: eine ähnliche Ansicht wie Fig. 1 mit zusätzlich eingezeichnetem Stellglied zur Verlagerung des Hauptlagers und mit geöffnetem Schiebedach eines vorderen Dachteils,
- Fig. 2: eine ähnliche Ansicht wie Fig. 1 nach horizontaler Verlagerung des Daches entgegen der Fahrtrichtung zur Einleitung einer Öffnung des Daches,
- Fig. 2a: eine ähnliche Ansicht wie Fig. 2 mit zusätzlich eingezeichnetem Stellglied zur Verlagerung des Hauptlagers und mit geöffnetem Schiebedach eines vorderen Dachteils,
- Fig. 3: eine ähnliche Ansicht wie Fig. 2 während der Öffnungsbewegung des Daches,
- Fig. 4: eine ähnliche Ansicht wie Fig. 3 bei vollständig geöffnetem Dach und wieder nach vorne verlagertem Schwenklager,
- Fig. 5: eine perspektivische Ansicht auf das Dach von schräg hinten in einer Stellung zwischen den Figuren 2 und 3,
- Fig. 6: eine Detailansicht der Dachspitze, etwa entsprechend dem Detail VI in Fig. 2, bei Annäherung an den Windschutzscheibenrahmen mit eingezeichneten Bewegungsrichtungen der Dachspitze.
- Fig. 7: eine ähnliche Ansicht wie Fig. 1 eines zweiten Ausführungsbeispiels,
- Fig. 8: eine ähnliche Ansicht wie Fig. 7 bei beginnender Dachöffnung, in etwa entsprechend einer Totpunktlage mit in einer Linie liegenden Gelenken,
- Fig. 9: eine ähnliche Ansicht wie Fig. 8 bei weiter fortschreitender Dachöffnung,
- Fig. 10: eine ähnliche Ansicht wie Fig. 9 bei vollständig geöffnetem Dach,
- Fig. 11 Fig. 15: bis den Bewegungsablauf der Dachöffnung in schematisierter und vereinfachter Darstellung des wirksamen Mehrgelenks mit eingezeichneten Wirklinien zwischen den Gelenken, darin

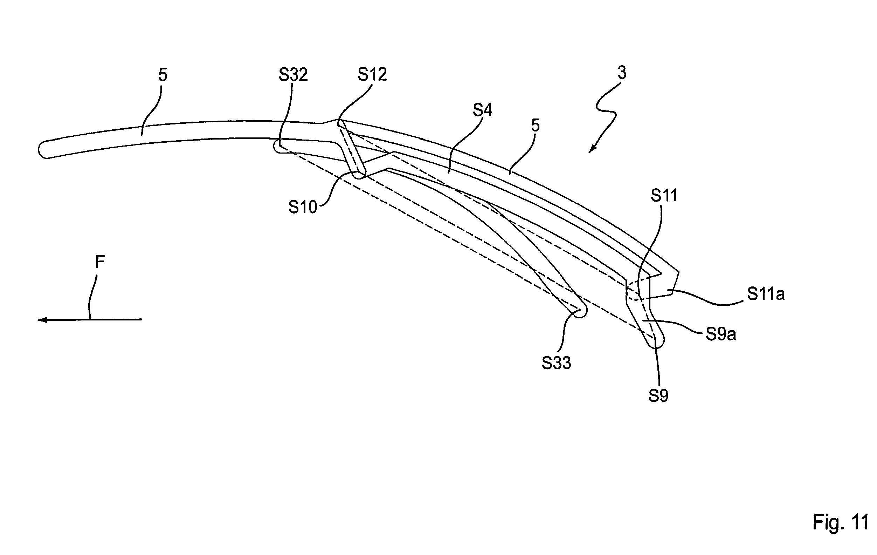

- Fig. 11: das Dach in geschlossener Stellung,

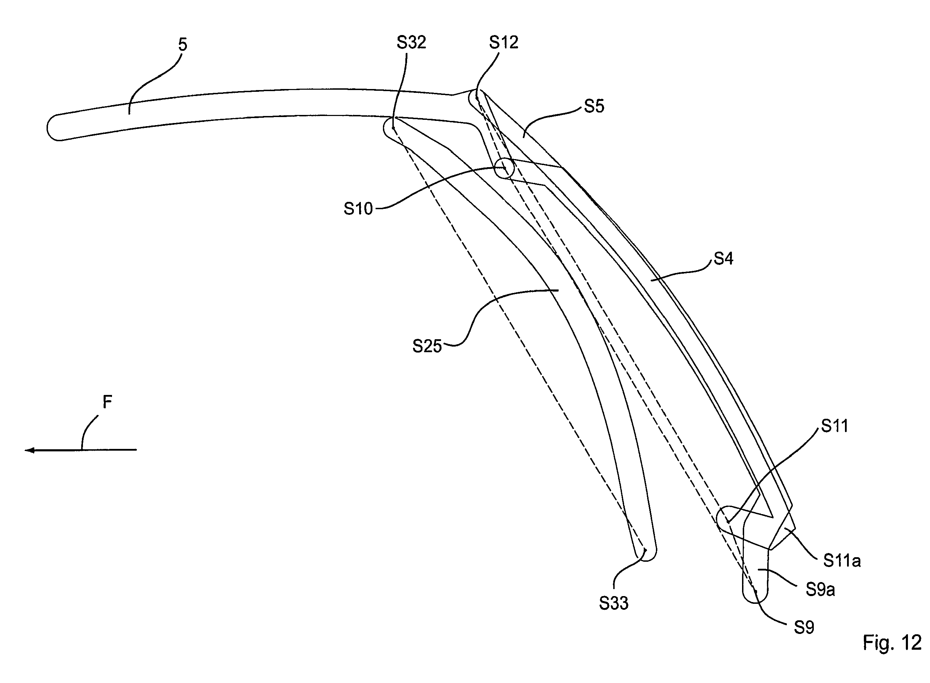

- Fig. 12: das Dach bei seiner beginnenden Öffnung,

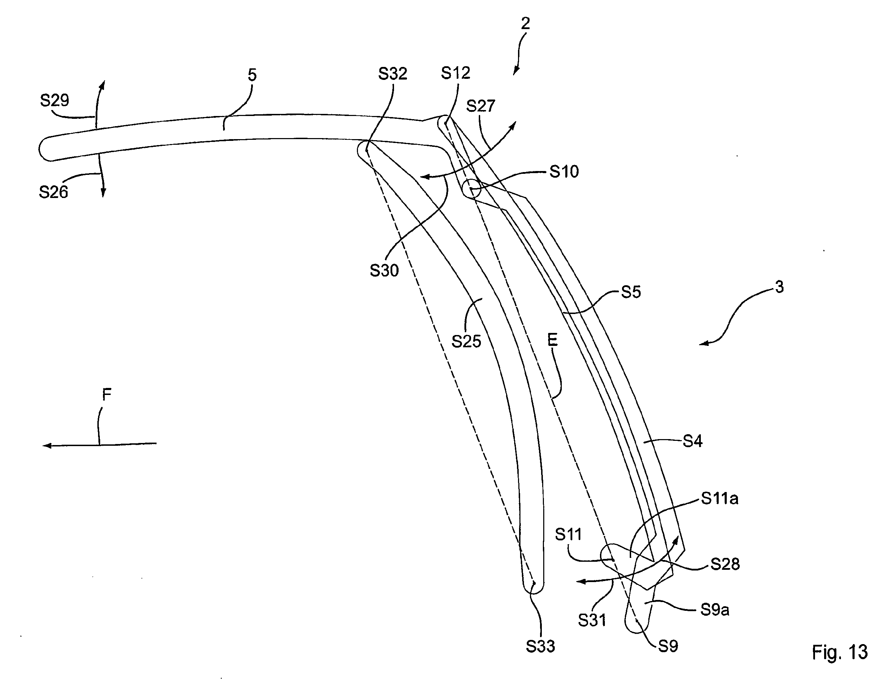

- Fig. 13: das Dach bei weiter fortschreitender Öffnung in einer Totpunktlage mit in einer Linie liegenden Gelenken,

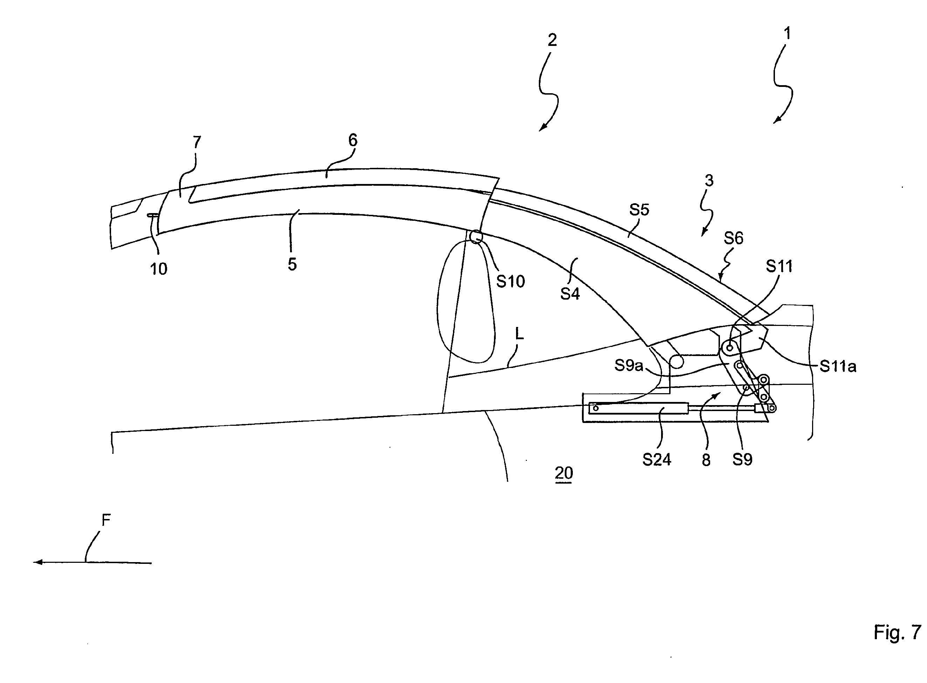

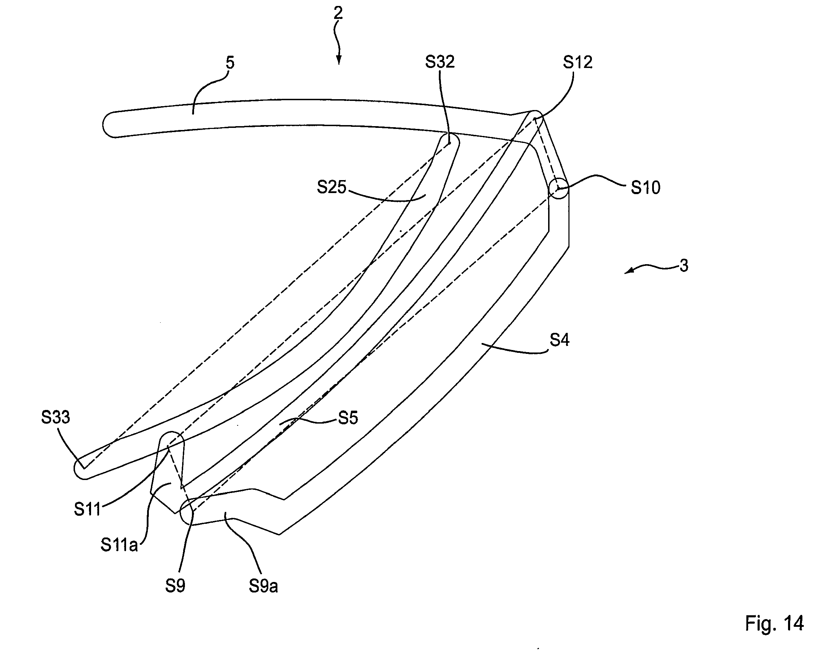

- Fig. 14: eine ähnliche Ansicht wie Fig. 7 bei weiter fortschreitender Dachöffnung,

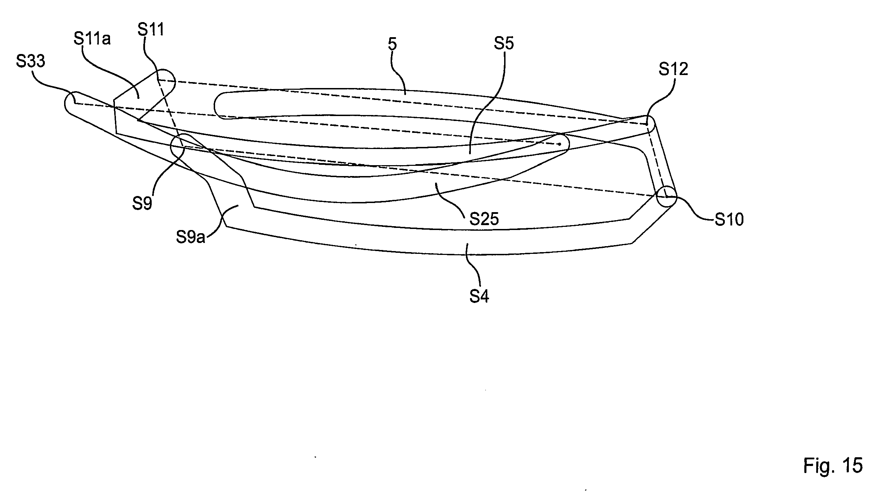

- Fig. 15: die vollständige Öffnungsstellung des Daches.

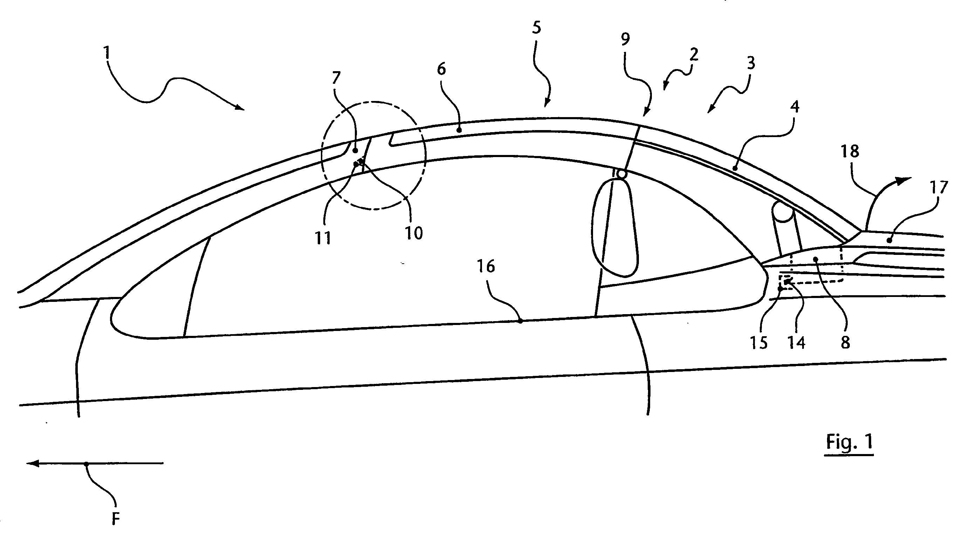

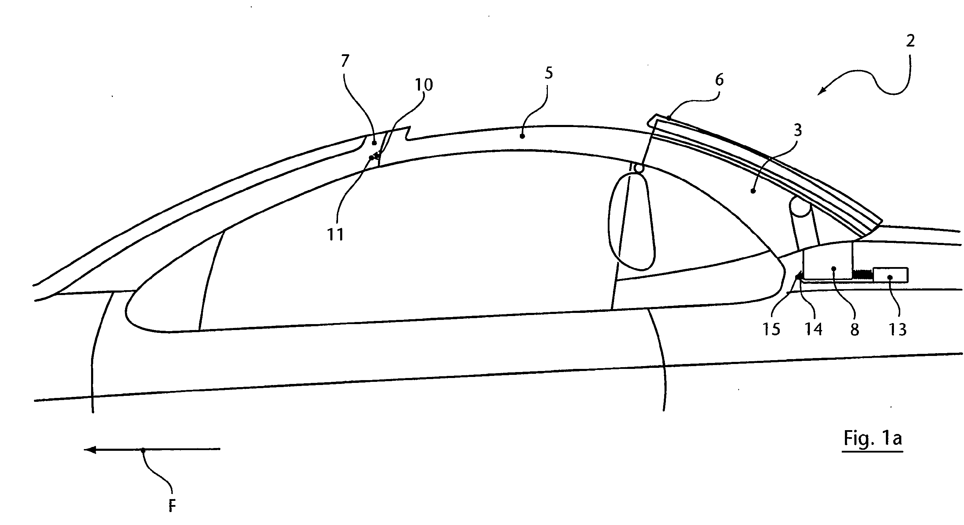

In Figur 1 ist ein zweisitziges erfindungsgemäßes Cabriolet-Fahrzeug 1 in seinem oberen Bereich schematisch dargestellt. Ein Cabriolet-Fahrzeug mit mehr Sitzplätzen, etwa mit zwei Sitzreihen hintereinander, kann ebenfalls erfindungsgemäß ausgebildet sein.

Das Fahrzeug 1 umfaßt ein bewegliches Dach, das insgesamt mit 2 bezeichnet ist und ein bezüglich der Fahrtrichtung F rückwärtiges Dachteil 3 mit einer flexiblen oder insbesondere starren Heckscheibe 4 umfaßt, die beispielsweise aus Kunststoff oder vorteilhaft Glas bestehen kann. Das Dachteil 3 ist im ersten Ausführungsbeispiel starr ausgebildet und besteht beispielsweise aus Stahl, einem Leichtmetall, einem metallischen Schaumwerkstoff oder Kunststoff. Es ist auch möglich, daß das hintere Dachteil 3 im wesentlichen nur von einer kuppelartig gewölbten Heckscheibe 4 gebildet ist.

Weiter umfaßt das Dach 2 ein gegenüber dem Dachteil 3 im geschlossenen Zustand in Fahrtrichtung F vorgeordnetes vorderes Dachteil 5. Dieses ist im Ausführungsbeispiel mit einem zweisitzigen Fahrzeug 1 von einem Plattenteil ohne weitere Querteilung gebildet. Im geschlossenen Zustand stützt sich dieses unmittelbar oder unter Zwischenschaltung noch eines weiteren Teils, etwa eines aufstellbaren Sonnenschutzes oder eines anderen Zwischenteils, am Windschutzscheibenrahmen 7 ab. Die Dachteile 3, 5 können nicht nur als starre Bauteile, sondern auch als textil bespannte Einheiten ausgebildet sein.

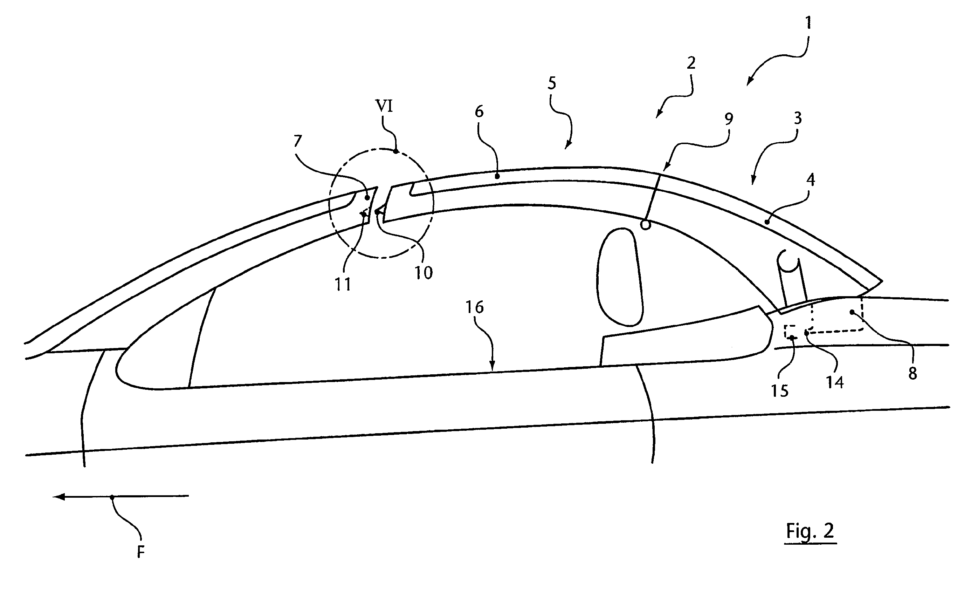

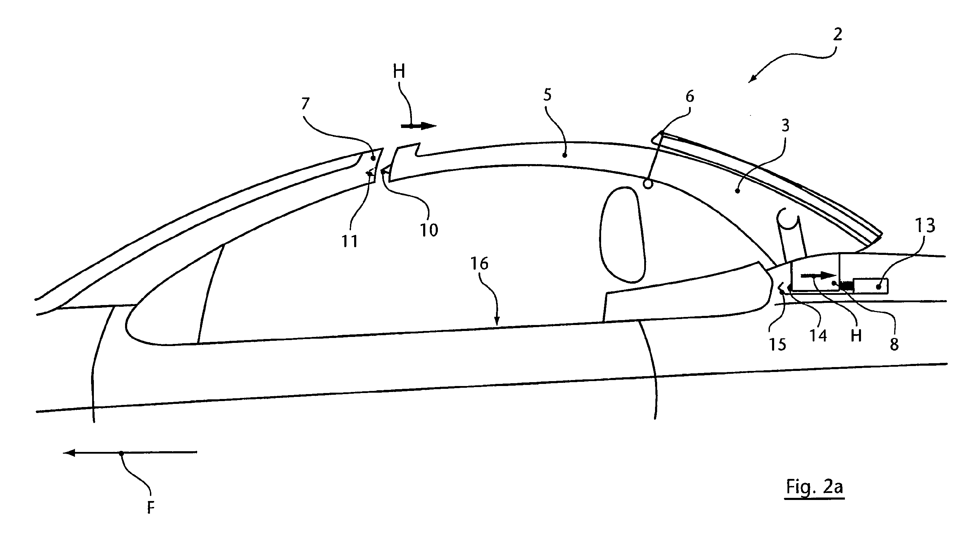

Das vordere Dachteil 5 umfaßt im Ausführungsbeispiel zusätzlich einen verschiebbaren Plattenkörper 6, der nach Art eines unten noch näher erläuterten Schiebedachs zu öffnen und hierbei über das rückwärtige Dachteil 3 zu verlagern ist (Fig. 1a, Fig. 2a).

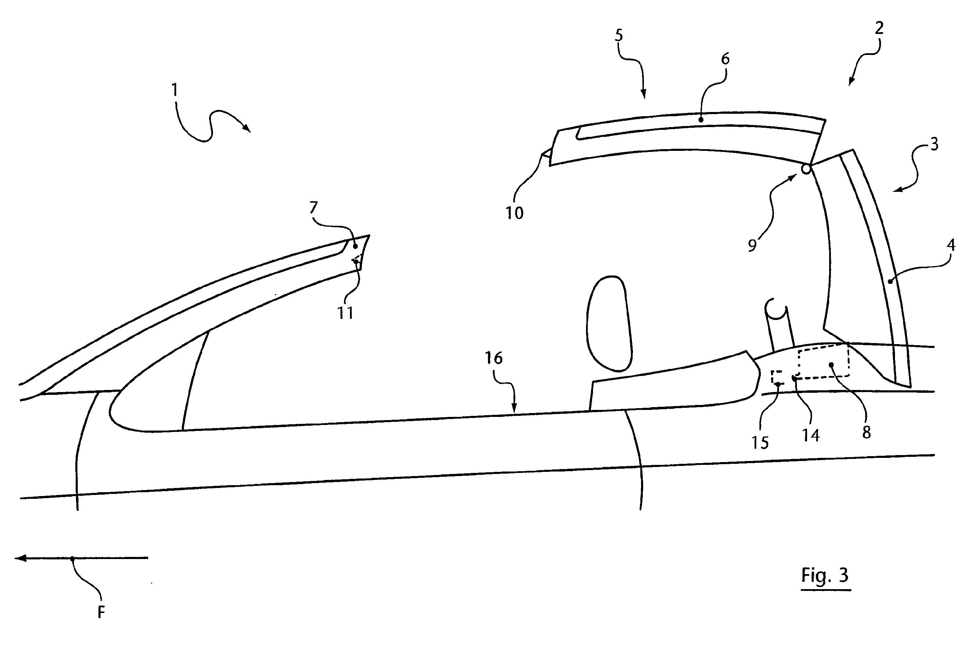

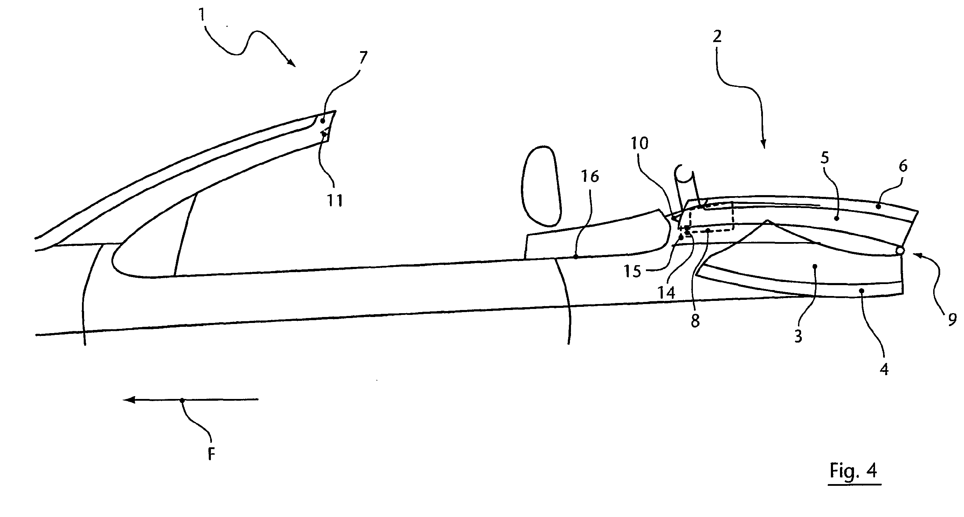

Die Dachteile 3, 5 sind für ihre Bewegung über seitlich in der Karosserie angeordnete Hauptlager 8 um diesen zugeordnete horizontale Achsen in Richtung des Pfeils S schwenkbar und in die Karosserie (Fig. 4) oder aus dieser (Fig. 1) beweglich. Die beiden Dachteile 3, 5 sind miteinander an einer Querfuge 9 derart gekoppelt, daß sie gemeinsam um das Hauptlager 8 schwenken und sich gleichzeitig zur Öffnung um die Trennfuge 9 gegeneinander einfalten können (Fig. 3). Anstelle der reinen Schwenklager 8 sind auch andere bewegliche Halterungen für das Dach 2 an der Karosserie möglich, wie etwa im zweiten Ausführungsbeispiel noch näher dargestellt ist.

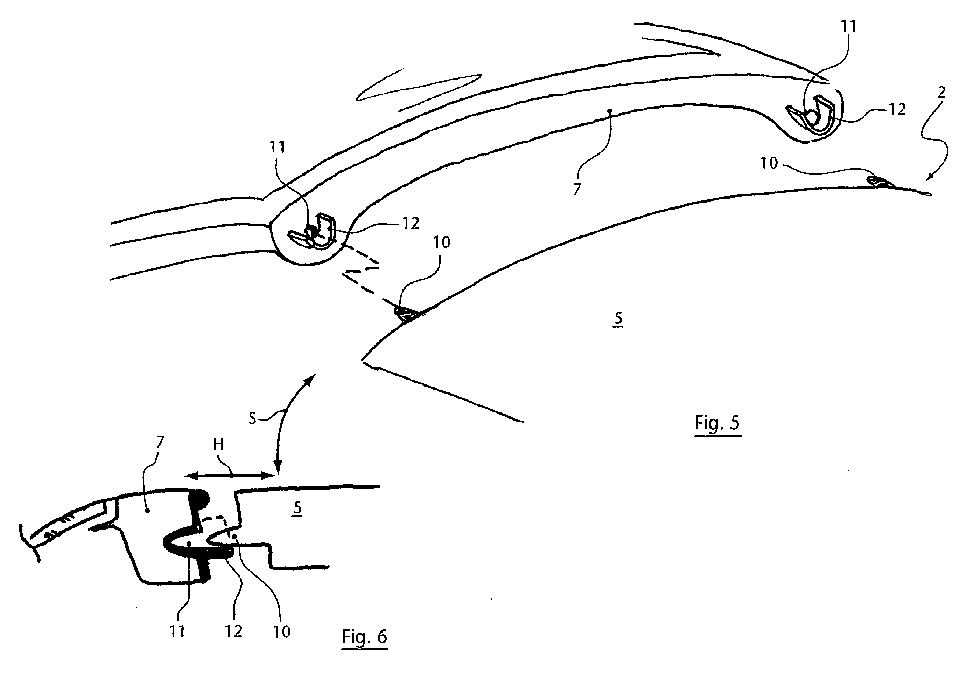

Zur Festlegung des vorderen Dachteils 5 am Windschutzscheibenrahmen 7 sind dem Dachteil 3 in etwa in dessen Erstreckungsebene gelegene und im geschlossenen Zustand in Fahrtrichtung F weisende Zapfen 10 zugeordnet, die in komplementäre Ausnehmungen 11 des Windschutzscheibenrahmens 7 eingreifen können. Die Zapfen 10 können ebenso wie die Ausnehmungen 11 konisch ausgebildet sein, um dadurch eine Zentrierung des schließenden Daches 2 zu erleichtern. Über in den Ausnehmungen 11 gehaltenen Zapfen 10 ist eine formschlüssige Verbindung zwischen dem geschlossenen Dach 2 und dem Windschutzscheibenrahmen 7 möglich (Fig. 1). Eine Führungshilfe 12 (Fig. 5) als Unterstützung für die einlaufenden Zapfen 10 kann vorgesehen sein. Dann ist das Dach auch in nach hinten verlagerter Stellung gegen ein Abwärtsbewegen der Dachspitze gesichert, was sowohl beim Öffnen als auch beim Schließen eine zusätzliche mechanische Stabilisierung bietet. In geschlossener Stellung ist ein formschlüssiger Eingriff der Zapfen 10 sichergestellt. Eine zusätzliche Sicherung ist aufgrund der unten noch erläuterten Sicherung des verschiebbaren Hauptlagers 8 zwar möglich, jedoch nicht erforderlich.

Anstelle der Zapfen 10 können auch andere geeignete Haltemittel vorgesehen sein.

Jedem der seitlichen Hauptlager 8 ist ein Antrieb 13 zugeordnet, etwa ein Hydraulikzylinder, eine Spindel, ein Elektromotor oder ähnliches. Über diesen ist das jeweilige Hauptlager 8 - und damit das an diesem gehaltene Dach 2 - horizontal in Richtung des Pfeils H beweglich (Übergang von Fig. 1 zu Fig. 2) zwischen einer vorderen Extremalstellung, in der ein vorderer Ausleger 14 des Hauptlagers 8 in einem Anschlag 15 liegt, und einer hinteren Extremalstellung (Fig. 2), in der das Dach 2 so weit entgegen der Fahrtrichtung verlagert ist, daß die Zapfen 11 außer Eingriff mit den Ausnehmungen 11 des Windschutzscheibenrahmens 7 gelangt sind. In dieser Stellung ist das Dach 2 frei um die Lager 8 in Richtung des Pfeils S schwenkbar, ohne daß Kollisionsgefahr der Dachspitze mit dem Windschutzscheibenrahmen 7 bestünde.

Der Weg H zwischen der vorderen und hinteren Extremalstellung des Antriebs 13 ist dabei über einen eventuell einstellbaren hinteren Anschlag derart begrenzt, daß in der hinteren Extremalstellung des Daches 2 die Zapfen gerade so weit außer Eingriff mit dem Windschutzscheibenrahmen 7 gelangt sind, daß das Schwenken stattfinden kann. Ein zu weites rückwärtiges Verlagern würde hingegen den Öffnungs- oder Schließvorgang unnötig verzögern. Der Weg H zwischen den Extremalstellungen beträgt daher nur wenige Zentimeter, etwa zwischen zwei und acht Zentimetern. Typisch ist ein Verschiebeweg von etwa 4 Zentimetern. Durch den kurzen Verschiebeweg H können die Horizontalverlagerung und das Schwenken S des Daches 2 vollständig nacheinander ablaufen.

Anstelle der gezeigten vollständig horizontalen Verschiebungen ist auch die Verschiebung der Lager 8 und des daran gehaltenen Daches 2 in einer leicht zur Horizontalen geneigten Ebene möglich, etwa in einer Ebene, die einer ansteigenden Fensterbrüstungslinie 16 folgen kann.

Im Ausführungsbeispiel ist dem Heckbereich der Karosserie ferner etwa in der Ebene der Fensterbrüstungslinie 16 ein Verdeckkastendeckel 17 zugeordnet, der in Richtung des Pfeils 18 aufschwenkbar ist.

Um die geschlossene Stellung des Daches 2 verriegelt zu halten und eine unbeabsichtigten Öffnung oder einen unbefugten Zugriff auf den Innenraum zu verhindern, sind, wie oben erwähnt, keine Schlösser im Bereich des Windschutzscheibenrahmens 7 erforderlich. Vielmehr können Schlösser beispielsweise den Auslegern 14 zugeordnet sein, womit diese in den Anschlägen 15 sicherbar sind.

Zur Öffnung des Daches 2 aus der geschlossenen Stellung (Fig. 1) in eine vollständig geöffnete Stellung (Fig. 4) öffnet zunächst der Verdeckkastendeckel 17 in Richtung des Pfeils 18. Dann werden nach Entriegelung der Schlösser, was fernbetätigt geschehen kann, über die Antriebe 13 die Ausleger 14 der Hauptlager 8 aus den Anschlägen 15 gelöst und die Hauptlager 8 entgegen der Fahrtrichtung F verlagert, gleichzeitig wird das vordere Dachteil 5 vom Windschutzscheibenrahmen 7 horizontal gelöst, indem die Zapfen 10 aus den Ausnehmungen 11 in Richtung des Pfeils H gezogen werden (Fig. 2, Fig. 6).

Anschließend wird das Dach 2 um die Lager 8 in Richtung des Pfeils S verschwenkt, gleichzeitig schwenken die Dachteile 3 und 5 um die Trennfuge 9 gegeneinander ein (Fig. 3).

In geöffneter Endstellung (Fig. 4) liegen die Dachteile parallel übereinander, die Hauptlager 8 können wieder nach vorne verfahren sein, um mittels der Ausleger 14 an den Anschlägen 15 gesichert zu sein. Somit kann auch die offene Dachstellung verriegelt sein. Durch die Vorwärtsverlagerung kann als zusätzliche Sicherung auch ein Eingreifen der in geöffneter Stellung wiederum in Fahrtrichtung F zeigenden Zapfen 10 in ein entsprechendes karosseriefestes Gegenlager (nicht eingezeichnet) vorgesehen sein.

In der geöffneten Stellung nach Figur 4 kann auch der Verdeckkastendeckel 17 über dem so abgelegten Dach 2 wieder schließen, so daß eine harmonische Seitenlinie erreicht ist.

Als zusätzliche Option kann eine Schiebedachfunktion für das vordere Dachteil 5 vorgesehen sein. Hierfür ist in Längsführungen des vorderen Dachteils 5 ein Plattenkörper 6 geführt, der in den Figuren 1a und 2a in geöffneter Position dargestellt ist. Zu seiner Öffnung kann der Plattenkörper 6 von den Längsführungen des vorderen Dachteils 5 an solche des hinteren Dachteils 3 übergeben werden und in Offenstellung oberhalb der Heckscheibe 4 und parallel zu dieser gehalten sein. Dabei gelangen in den Längsführungen liegende Halterungen des Plattenkörpers 6 in die der Trennfuge 9 zugeordnete horizontale und quer zum Fahrzeug 1 liegende Schwenkachse der Dachteile 3 und 5 zueinander. Diese Schwenkachse ist sowohl dem vorderen 5 als auch dem hinteren Dachteil 3 zugeordnet und in der jeweiligen Längsführung ohne Versatz zu erreichen. Dadurch kann das Öffnen und Schließen des Daches 2 sowohl bei geöffnetem als auch bei geschlossenem Schiebedach 6 erfolgen, wobei hier in den Figuren 3 und 4 die Öffnung bei geschlossenem Schiebedach 6 gezeigt ist.

Eine Programmsteuerung kann vorgesehen sein, über die sichergestellt ist, daß das Dach 2 nur bei vollständig geöffnetem oder vollständig geschlossenem Schiebedach 6 geöffnet oder geschlossen werden kann. Der Plattenkörper 6 kann etwa auch transparent sein, um auch bei geschlossenem Dach ein großzügiges Raumgefühl sicherzustellen.

Alternativ wäre es auch möglich, daß der Plattenkörper 6 im geschlossenem Zustand nur an dem oberen Dachteil 5 gehalten ist und im geöffneten Zustand vollständig an den hinteren Dachteil 3 übergeben ist.

Im zweiten Ausführungsbeispiel (Fig. 7 bis Fig. 15) weist das rückwärtige Dachteil 3 zwei seitliche Hauptsäulen S4 und einem dazwischen befindlichen Mittelbereich S5 auf. Dieser umfaßt die Heckscheibe S6, kann auch im wesentlichen von dieser gebildet sein. Sowohl die Hauptsäulen S4 als auch der Mittelbereich S5 sind starr und können daher Drehmomente übertragen. Die Hauptsäulen S4 sowie ein eventueller Rahmen des Mittelteils S5 können beispielsweise aus Stahl, einem Leichtmetall, einem metallischen Schaumwerkstoff oder Kunststoff gebildet sein. Es ist auch möglich, daß auch die Hauptsäulen S4 transparent ausgebildet sind. Des weiteren können die Hauptsäulen S4 von Rahmenteilen unterstützt sein.

Das im geschlossenen Zustand in Fahrtrichtung F vorgeordnete Dachteil 5 kann wie die Hauptsäulen S4 aus verschiedenen Materialien gebildet sein.

Die Hauptsäulen S4 erstrecken sich bei geschlossenem Dach 2 (Fig. 7) zumindest zwischen einer Fensterbrüstungslinie L - sie können auch weiter unten in der Karosserie 20 beginnen - und dem oberen und in Fahrtrichtung F vorgeordneten Dachteil 5, das oberhalb eines Insassenraums gelegen ist. Die Hauptsäulen S4 sind in ihrem unteren Bereich über Ausleger S9a gegenüber der Karosserie 20 an zumindest während des Verschwenkens karosseriefesten Schwenkgelenken S9 gehalten. Deren Gelenkachsen liegen horizontal und quer zum Fahrzeug 1. Im oberen Bereich sind die Hauptsäulen S4 an Schwenkgelenken S10, die ebenfalls horizontale und quer zum Fahrzeug 1 erstreckte Gelenkachsen aufweisen, mit dem Dachteil 5 verbunden. Um die Achse der Schwenkgelenke S10 falten die Dachteile 3 und 5 bei der Dachöffnung gegeneinander ein.

Der Mittelbereich S5 ist in seinem unteren Bereich über Ausleger S11a gegenüber der Karosserie 20 an einem oder mehreren zumindest während des Verschwenkens karosseriefesten Schwenkgelenk(en) S11 gehalten. Deren Achsen liegen horizontal und quer zum Fahrzeug 1. Im oberen Bereich ist der Mittelteil S5 an zumindest einem Schwenkgelenk S12, das ebenfalls eine horizontale und quer zum Fahrzeug 1 erstreckte Lagerachse aufweist, mit dem oberen Dachteil 5 verbunden. Im Ausführungsbeispiel sind jeweils zwei Schwenkgelenke S11, S12, die den beiden Fahrzeugseiten zugeordnet sind, vorgesehen.

Die unteren Schwenkgelenke S11 des Mittelteils S5 liegen jeweils in einer Ebene oberhalb der Ebene der Schwenkgelenke S9 der seitlichen Hauptsäulen S4; die oberen Schwenkgelenke S12 des Mittelteils S5 liegen jeweils in einer Ebene oberhalb der Ebene der Schwenkgelenke S10 der Hauptsäulen S4. Auch hier können die Schwenklager S9 und S11 als Bestandteil eines Hauptlagers 8 zwar während des Verschwenkens karosseriefest, jedoch zwischen einer geschlossenen Dachstellung und einer zum Schwenken geeigneten hinteren Extremalstellung horizontal oder nahezu horizontal verschieblich sein.

Die Gelenke S9, S10, S11, S12 bilden in Seitenansicht eine Mehrgelenkanordnung aus - im gezeichneten Ausführungsbeispiel pro Fahrzeugseite jeweils ein Viergelenk. Sofern die Verbindungslinien zwischen den Gelenken S9, S10 einerseits und S11, S12 andererseits jeweils gleichlang sind, ergibt sich daraus ein Schwenkparallelogramm - in den Figuren 11 bis 15 gestrichelt eingezeichnet - mit den Eckpunkten S9, S10, S11, S12.

Zusätzlich zu dieser Mehrgelenkanordnung S9, S10, S11, S12 ist für das vordere Dachteil 5 eine gesonderte Abstützung S25 vorgesehen, die bei geschlossenem Dach 2 optisch verdeckt in einer Schlitzführung des Daches 2 aufgenommen ist und das Dachteil 5 gegenüber der Karosserie 20 abstützen kann. Es kann hinreichend sein, nur an einer Fahrzeugseite eine solche Abstützung S25 vorzusehen. Auch aus Symmetriegründen kann jeder Fahrzeugseite eine Abstützung S25 zugeordnet werden. Diese Abstützung S25 ist zumindest in der sog. Totpunktstellung nach Fig. 13 wirksam, in der alle Gelenke S9, S10, S11, S12 der Mehrgelenkanordnung auf einer Linie liegen. Ohne die zusätzliche Abstützung S25 könnte aus dieser Stellung heraus das vordere Dachteil 5 entweder in Richtung des Pfeils S26 nach unten kippen und dabei den Mittelteil S5 um die Gelenke S11, S12 in Richtung der Pfeile S27, S28 bewegen, oder das vordere Dachteil 5 könnte in Richtung des Pfeils S29 nach oben bewegbar sein und dabei den Mittelteil 5 um die Gelenke S11, S12 in Richtung der Pfeile S30, S31 bewegen. Die Abstützung S25 erfüllt dabei für das vordere Dachteil 5 eine doppelte Haltefunktion: sowohl entgegen der Abwärtsrichtung des Pfeils S26 als auch entgegen der Aufwärtsrichtung des Pfeils S29. Im Ausführungsbeispiel ist daher die Abstützung S25 als starrer Lenker ausgebildet. Auch ein Zug-Druck-Bowdenzug käme beispielsweise in Betracht.

Alternativ wäre es möglich, etwa einen Seilzug mit einer Unlenkung vorzusehen, der das Abkippen des vorderen Dachteils 5 durch sein Eigengewicht verhindert. Die Stützwirkung entgegen dem Pfeil S29 ist dabei insofern weniger wichtig, als schon die Gewichtskraft des Dachteils 5 dieser Bewegung entgegenwirkt.

Der Lenker S25 kann in seinem oberen Gelenk S32 am Dachteil 5 oder in seinem unteren Gelenk S33 an der Karosserie 20 etwa mit Spiel gehalten sein, da er im Unterschied zu einer Führungsstange für die Schwenkbewegung des Daches 2 nicht (mit)führend sein muß, sondern lediglich eine Abstützfunktion in der besagten Totpunktstellung haben muß. So kann beispielsweise das obere Gelenk S32 für den Lenker S25 am Dachteil 5 in einer Langlochkulisse verschieblich sein. Ebenso kann auch in dem Lenker S25 selbst ein elastisches Spiel vorhanden sein.

In Fig. 13 ist in der Totpunktlage ein Viergelenk von den Gelenken S9, S10 der Hauptsäulen S4 einerseits und den Gelenken S32, S33 der Abstützung S25 andererseits gebildet.

Bei einer toleranzarmen Montage der Abstützung S25 kann diese auch zumindest phasenweise in der weiteren Dachöffnungs- oder -schließbewegung als Teil einer Mehrgelenkanordnung oder eines Schwenkparallelogramms dienen. So kann beispielsweise auch in Fig. 14 eine Wirklinie der Mehrgelenkanordnung zwischen den Gelenken S9, S10 der Hauptsäule S4 und eine weitere Wirklinie zwischen den Gelenken S32 und S33 der Abstützung S25 liegen. Ebenso kann auch die erste Wirklinie zwischen den Gelenken S9, S10 der Hauptsäule S4 und eine weitere Wirklinie zwischen den Gelenken S11, S12 des Mittelteils S5 liegen.

Die Wirksamkeit der Abstützung S25 kann daher während der Bewegung variieren und ist lediglich in der Totpunktlage (Fig. 13), in der das Schwenkparallelogramm aus den Gelenken S9, S10, S11, S12 durchgeschwenkt wird und daher alle Achsen dieser Gelenke parallel in einer gemeinsamen Ebene liegen, zwingend vorgegeben. Während der gesamten sonstigen Bewegung und Endstellung des Daches 2 kann die Abstützung S25 daher entbehrlich sein, da die zwei weiteren Gelenke S32, S33 für eine Überbestimmung des Getriebes für die Dachbewegung sorgen.

Ein weiterer Vorteil dieses Ausführungsbeispiels zeigt sich darin, daß sowohl bei geschlossenem Dach (Fig. 11) als auch bei vollständig geöffnetem Dach (Fig. 15) das Schwenkparallelogramm mit den Achsen der Gelenke S9, S10, S11, S12 als Eckpunkte weit geöffnet ist, wodurch die Kraft zum Bewegen des Daches 2 aus diesen Endlagen, insbesondere aus der geöffneten Stellung, minimiert ist und sich günstige Hebelarme zum Angreifen des Antriebsorgans S24 ergeben.

Der Mittelbereich S5 kann durch einen Tragrahmen und ein darauf befestigtes transparentes Plattenteil, das als Heckscheibe S6 dient, gebildet sein. Dieses kann ggf. die Führungsschienen für das Schiebedach 6 tragen. Auch viele andere Konstruktionen - etwa auch mit einem Rahmen, in dessen Mitte die Heckscheibe gelegen ist, oder mit direkt an eine Heckscheibe angeschweißten Auslegern - sind möglich.

Die karosseriefesten Schwenklager S9, S11 für die Teile S4, S5 sind wie im ersten Ausführungsbeispiel insgesamt in einem gegenüber der Karosserie 20 horizontal oder nahezu horizontal in Fahrzeuglängsrichtung verschieblichen Hauptlager 8 angeordnet.

Es genügt für die Schwenkbewegung des Daches 2 ein Antrieb S24 pro Fahrzeugseite, um eine gleichmäßige Schwenkbewegung um die Lager S9 und S11 zu bewirken.

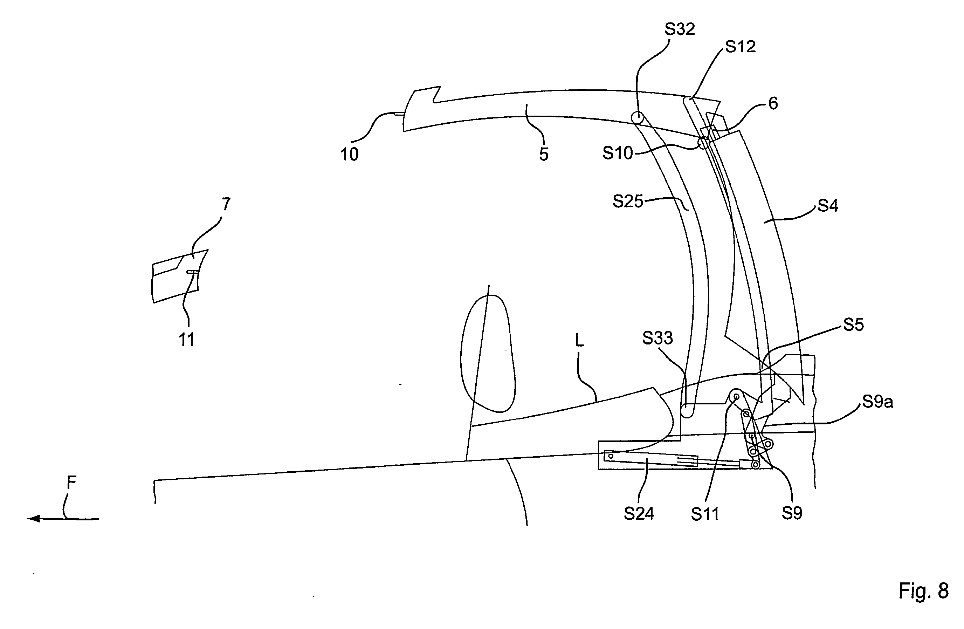

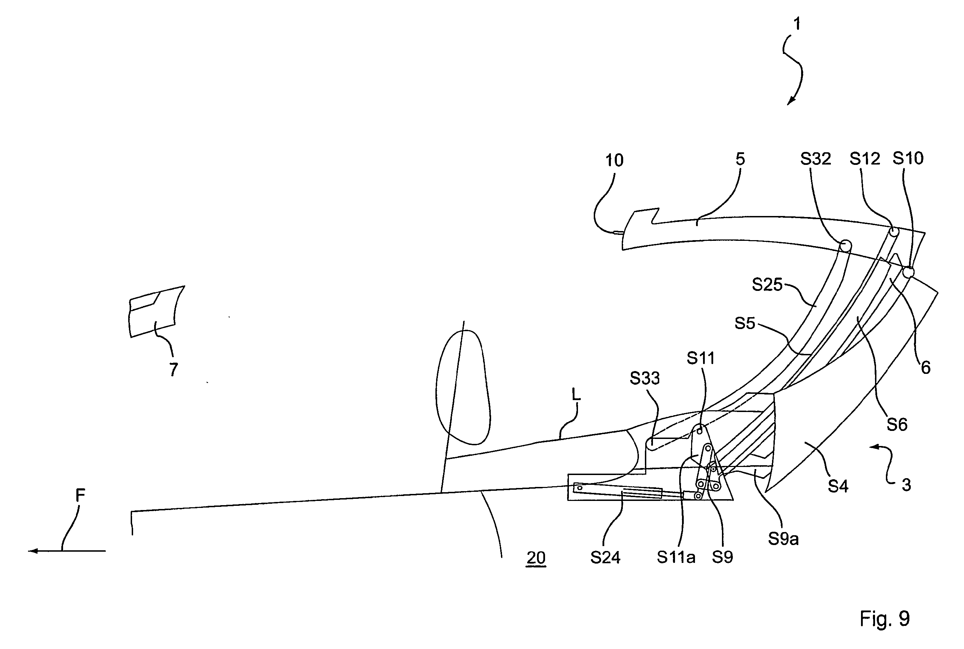

Zur Öffnung des Daches 2 aus der geschlossenen Stellung (Fig. 7) in eine vollständig geöffnete Stellung (Fig. 11) werden - ohne die Option des insgesamt verschieblichen Daches 2 - zunächst durch Kraft des Antriebs S24 die Ausleger S9a um die jeweiligen karosseriefesten Lager S9 heckwärts verschwenkt (Fig. 8, Fig. 9). Im hier gezeigten Beispiel wird vor Dachöffnung zunächst das Schiebedach 6 über Führung der Ausleger in den Führungsbahnen und Weiterführung des Plattenkörpers 6 in den Führungsschienen des hinteren Dachteils 3 derart geöffnet, daß in seiner vollständig geöffneten Stellung die Achsstummel koaxial mit der Schwenkachse des Schwenkgelenks S12 liegen. Dabei sind die Achsstummel weiter in den Führungsbahnen gehalten, sie müssen somit beim Aufschieben des Schiebedachs 6 weder eine Stufe noch einen Versatz überwinden. Da der Mittelbereich S5 und das Dachteil 5 am Gelenk S12 gegeneinander einschwenken, kann während dieses Einschwenkens der Plattenkörper 6 unbewegt parallel zu der dem Mittelbereich S5 zugehörigen Heckscheibe S6 gehalten sein und dennoch mit den Auslegern in den Führungsbahnen des vorderen Dachteils 5 verbleiben.

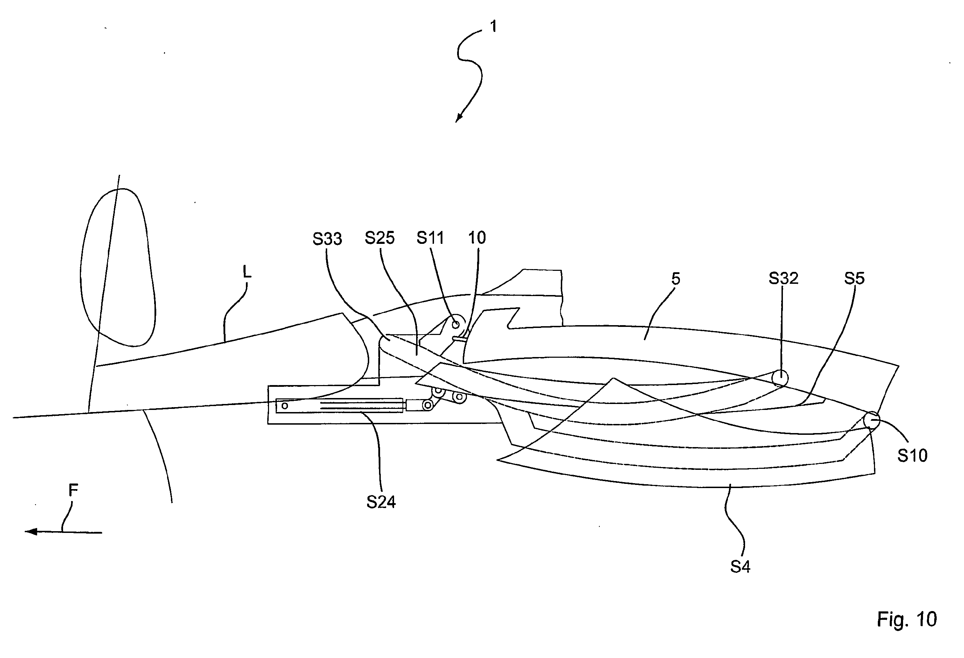

Während des Aufschwenkens der Dachteile 3 und 5 durchläuft aufgrund des Höhenversatzes der Ebenen der Gelenke S9 und S10 einerseits und S11 und S12 andererseits der Mittelbereich S5 die Erstreckungsebene der Hauptsäulen S4. Die Langseiten des Gelenkparallelogramms, gebildet aus den Hauptsäulen S4 und dem Mittelbereich S5, falten gegeneinander durch, so daß am Ende die Parallelogrammorientierung gewechselt hat. Dadurch gelangt der Mittelbereich S5 in eine oberhalb der Hauptsäulen S4 liegende Ablagestellung in der Karosserie 20 (Fig. 10, Fig. 15). Dies ist sehr vorteilhaft, weil dadurch unter dem Mittelbereich S5 mit der Heckscheibe S6 zusätzlicher Stauraum entsteht.

Die Erfindung ist sowohl bei Fahrzeugen mit manuell zu bewegenden Dächern auch bei voll- oder teilautomatischer Beweglichkeit des Daches 2 anwendbar. Es ist auch möglich, daß lediglich für die Horizontalverschiebung H Antriebe 13 vorgesehen sind und das eigentliche Ein- oder Ausfalten des Daches 2 manuell erfolgt.

## Patentansprüche

1. Bewegliches Fahrzeugdach für ein Cabriolet-Fahrzeug (1), welches an seitlichen Hauptlagern (8) gegenüber einer Fahrzeugkarosserie beweglich haltbar ist , wobei das ansonsten zu seinem Öffnen und Schließen insgesamt aufschwenkbare Dach zwischen einer geschlossenen Stellung, in der ein vorderer Dachbereich mittelbar oder unmittelbar an einem Windschutzscheibenrahmen (7) gehalten ist, und einer zum Aufschwenken geeigneten Zwischenstellung, in der die Halterung zwischen dem Dach (2) und dem Windschutzscheibenrahmen (7) gelöst ist, zumindest nahezu horizontal verlagerbar ist,
**dadurch gekennzeichnet,**
**daß** die Hauptlager (8) zumindest nahezu horizontal gegenüber der Fahrzeugkarosserie (20) verlagerbar sind.

2. Bewegliches Fahrzeugdach nach Anspruch 1
**dadurch gekennzeichnet,**
**daß** der Weg (H) der zumindest nahezu horizontalen Verlagerung zwischen zwei und acht Zentimetern beträgt.

3. Bewegliches Fahrzeugdach nach einem der Ansprüche 1 oder 2,
**dadurch gekennzeichnet,**
**daß** die Halterung des vorderen Dachbereichs an dem Windschutzscheibenrahmen (7) verriegelungsfrei ist und den verschiebbaren Hauptlagern (8) zumindest eine Verriegelung zugeordnet ist.

4. Bewegliches Fahrzeugdach nach einem der Ansprüche 1 bis 3,
**dadurch gekennzeichnet,**
**daß** der vordere Dachbereich mit dem Windschutzscheibenrahmen (7) formschlüssig verbindbar ist.

5. Bewegliches Fahrzeugdach nach Anspruch 4,
**dadurch gekennzeichnet,**
**daß** hierfür dem vorderen Dachbereich im wesentlichen in Erstreckungsrichtung eines vorderen Dachteils (5) liegende Zapfen (10) zugeordnet sind, die in komplementäre Ausnehmungen (11) des Windschutzscheibenrahmens (7) eingreifen können.

6. Bewegliches Fahrzeugdach nach Anspruch 5,
**dadurch gekennzeichnet,**
**daß** die Zapfen (10) eine konische Ausbildung haben.

7. Bewegliches Fahrzeugdach nach einem der Ansprüche 1 bis 6,
**dadurch gekennzeichnet,**
**daß** zum Öffnen des Daches (2) der Verlagerungsweg (H) der zumindest nahezu horizontalen Verlagerung entgegen der Fahrtrichtung (F) bis zu einer Dachstellung begrenzt ist, in dem der vordere Dachbereich nach oben ohne Kollisionsgefahr mit dem Windschutzscheibenrahmen (7) frei schwenkbar ist.

8. Bewegliches Fahrzeugdach nach einem der Ansprüche 1 bis 7,
**dadurch gekennzeichnet,**
**daß** die translatorische Dachverlagerung (H) und eine solche Dachbewegung, in der eine Schwenkkomponente (S) zumindest enthalten ist, nacheinander ablaufen.

9. Bewegliches Fahrzeugdach nach einem der Ansprüche 1 bis 8,
**dadurch gekennzeichnet,**
**daß** das Dach (2) mehrere starre Dachteile (3;5) umfaßt, von denen sich ein hinterer Dachteil (3) zumindest zwischen einer Fensterbrüstungslinie (L) und einem in Fahrtrichtung (F) vorgeordneten und oberhalb eines Insassenraums liegenden Dachteil (5) erstreckt und einen im geschlossenen Dachzustand zwischen seitlichen Hauptsäulen (S4) liegenden, eine Heckscheibe umfassenden Mittelbereich (S5) aufweist.

10. Bewegliches Fahrzeugdach nach Anspruch 9,
**dadurch gekennzeichnet,**
**daß** die Hauptsäulen (S4) einerseits und der Mittelbereich (S5) andererseits jeweils für sich sowohl mit der Fahrzeugkarosserie (20) als auch mit dem oberen Dachteil (5) schwenkbeweglich über Gelenke (S9,S10;S11,S12) verbunden sind, die in Seitenansicht eine Mehrgelenkanordnung bilden und deren Drehachsen in zumindest einer Bewegungsstellung des Daches (2) in einer gemeinsamen Ebene (E) liegen, wobei zumindest eine zusätzliche Abstützung (S25) des oder eines vor dem hinteren Dachteil (3) liegenden Dachteils (5) gegenüber der Karosserie (20) vorgesehen ist, die in zumindest dieser Bewegungsstellung wirksam ist.

11. Bewegliches Fahrzeugdach nach Anspruch 10
**dadurch gekennzeichnet,**
**daß** die Mehrgelenkanordnung ein Viergelenk (S9,S10;S11,S12) bildet.

12. Bewegliches Fahrzeugdach nach einem der Ansprüche 10 oder 11,
**dadurch gekennzeichnet,**
**daß** die Hauptsäulen (S4) einerseits und der Mittelbereich (S5) andererseits Teile eines Schwenkparallelogramms bilden.

13. Bewegliches Fahrzeugdach nach einem der Ansprüche 10 bis 12,
**dadurch gekennzeichnet,**
**daß** während eines Teils der Dachöffnungs-oder -schließbewegung die Hauptsäulen (S4) einerseits und der Mittelbereich (S5) andererseits eine Mehrgelenkkette (S9,S10;S11,S12) und während eines Teils der Bewegung die Hauptsäulen (S4) und die zusätzliche Abstützung (S25) eine Mehrgelenkkette (S9,S10;S32,S33) bilden.

14. Bewegliches Fahrzeugdach nach Anspruch 13,
**dadurch gekennzeichnet,**
**daß** während eines Teils der Dachöffnungs-oder -schließbewegung die Hauptsäulen (S4) einerseits und der Mittelbereich (S5) andererseits ein Schwenkparallelogramm und während eines Teils der Bewegung die Hauptsäulen (S4) und die zusätzliche Abstützung (S25) ein Schwenkparallelogramm bilden.

15. Bewegliches Fahrzeugdach nach einem der Ansprüche 10 bis 14,
**dadurch gekennzeichnet,**
**daß** die zusätzliche Abstützung (S25) ein oder das vordere Dachteil (5) gegenüber der Fahrzeugkarosserie (20) abstützt.

16. Bewegliches Fahrzeugdach nach einem der Ansprüche 10 bis 15,
**dadurch gekennzeichnet,**
**daß** die oder jede Abstützung (S25) als in sich oder in zumindest einer ihrer Anbindungen (S32;S33) elastischer Lenker ausgebildet ist.

17. Bewegliches Fahrzeugdach nach einem der Ansprüche 10 bis 16,
**dadurch gekennzeichnet,**
**daß** die Anlenkung (S11) des Mittelbereichs (S5) an der Karosserie (20) und die Anlenkung (S12) des Mittelbereichs (S5) an dem oberen Dachteil (5) jeweils oberhalb der Ebenen der jeweiligen Anlenkung (S9;S10) der Hauptsäule (S4) gelegen sind.

18. Bewegliches Fahrzeugdach nach Anspruch 17,
**dadurch gekennzeichnet,**
**daß** im geöffneten Zustand die Heckscheibe (S6) oberhalb der Hauptsäulen (S4) gehalten ist.

19. Bewegliches Fahrzeugdach nach einem der Ansprüche 10 bis 18,
**dadurch gekennzeichnet,**
**daß** der Mittelbereich (S5) im wesentlichen über seine ganze Höhe als Heckscheibe (S6) ausgebildet ist.

20. Bewegliches Fahrzeugdach nach einem der Ansprüche 10 bis 19,
**dadurch gekennzeichnet,**
**daß** dem oberen Dachteil (5) ein Plattenkörper (S13) zugeordnet ist, der in seitlichen Führungen längsverschieblich gehalten ist.

21. Cabriolet-Fahrzeug (1) mit einem beweglichen Fahrzeugdach (2) nach einem der Ansprüche 1 bis 20.

## Claims

1. A movable roof for a convertible vehicle (1), said roof being supportable on lateral main bearings (8) to be movable with respect to a vehicle body, and said roof, which can otherwise be pivoted upwards for opening and closing as a whole, is at least nearly horizontally displaceable between a closed position, in which a front roof region is held indirectly or directly on a windscreen frame (7), and an intermediate position, suitable for pivoting the roof upwards, in which the engagement between the roof (2) and the windscreen frame (7) is released,
**characterised in that**
the main bearings (8) are displaceable at least nearly horizontally with respect to the vehicle body (20).

2. The movable vehicle roof according to claim 1, **characterised in that** the length (H) of the at least nearly horizontal displacement is between two and eight centimetres.

3. The movable vehicle roof according to any one of claims 1 or 2, **characterised in that** the front roof region is held on the windscreen frame (7) in a latch-free manner and that at least one latch is assigned to the displaceable main bearings (8).

4. The movable vehicle roof according to any one of claims 1 to 3, **characterised in that** the front roof region is connectable to the windscreen frame (7) in a form-fitting manner.

5. The movable vehicle roof according to claim 4, **characterised in that** pins (10) are assigned to the front roof region for this purpose, said pins (10) being located substantially in the direction of extension of a front roof part (5) and being able to engage in complementary recesses (11) of the windscreen frame (7).

6. The movable vehicle roof according to claim 5, **characterised in that** the pins (10) have a conical shape.

7. The movable vehicle roof according to any one of claims 1 to 6, **characterised in that**, for opening the roof (2), the length of displacement (H) of the at least nearly horizontal displacement, opposite the direction of travel (F), is limited by a roof position in which the front roof region can be freely pivoted upwards without a risk of collision with the windscreen frame (7).

8. The movable vehicle roof according to any one of claims 1 to 7, **characterised in that** the translational roof displacement (H) and a roof movement which at least includes a pivoting component (S) take place one after the other.

9. The movable vehicle roof according to any one of claims 1 to 8, **characterised in that** the roof (2) comprises a plurality of rigid roof parts (3; 5), of which a rear roof part (3) extends at least between a window-sill line (L) and a roof part (5), which is located in front when viewed in the direction of travel (F) and above a passenger compartment, and said rear roof part (3) comprises a central region (S5), located between lateral main pillars (S4) when the roof is closed and comprising a rear window.

10. The movable vehicle roof according to claim 9, **characterised in that** the main pillars (S4) on the one hand and the central region (S5) on the other hand are each independently articulated to the vehicle body (20) and to the upper roof part (5) via articulations (S9,S10; S11,S12), which form a multi-bar linkage when viewed laterally and whose axes of rotation are located in a common plane (E) in at least one movement position of the roof (2), wherein at least one additional support (S25) is provided to support the or a roof part (5), located in front of the rear roof part (3), with respect to the body (20), said support (S25) being effective at least in this movement position.

11. The movable vehicle roof according to claim 10, **characterised in that** the multi-bar linkage forms a four-bar linkage (S9,S10; S11,S12).

12. The movable vehicle roof according to any one of claims 10 or 11, **characterised in that** the main pillars (S4) on the one hand and the central region (S5) on the other hand form parts of a pivoting parallelogram.

13. The movable vehicle roof according to any one of claims 10 to 12, **characterised in that**, during part of the roof opening or closing movement, the main pillars (S4) on the one hand and the central region (S5) on the other hand form a multi-link chain (S9,S10; S11,S12), and during part of the movement the main pillars (S4) and the additional support (S25) form a multi-link chain (S9,S10; S32,S33).

14. The movable vehicle roof according to claim 13, **characterised in that**, during part of the roof opening or closing movement, the main pillars (S4) on the one hand and the central region (S5) on the other hand form a pivoting parallelogram, and during part of the movement the main pillars (S4) and the additional support (S25) form a pivoting parallelogram.

15. The movable vehicle roof according to any one of claims 10 to 14, **characterised in that** the additional support (S25) supports a/the front roof part (5) with respect to the vehicle body (20).

16. The movable vehicle roof according to any one of claims 10 to 15, **characterised in that** the or each support (S25) is provided as a connecting rod which is elastic in itself or in at least one of its linkages (S32; S33).

17. The movable vehicle roof according to any one of claims 10 to 16, **characterised in that** the articulation (S11) of the central region (S5) to the vehicle body (20) and the articulation (S12) of the central region (S5) to the upper roof part (5) are each located above the planes of the respective articulations (S9; S10) of the main pillar (S4).

18. The movable vehicle roof according to claim 17, **characterised in that** the rear window (S6) is held above the main pillars (S4) in the opened state.

19. The movable vehicle roof according to any one of claims 10 to 18, **characterised in that** the central region (S5) is provided substantially over its entire height as a rear window (S6).

20. The movable vehicle roof according to any one of claims 10 to 19, **characterised in that** a plate body (S13), held longitudinally displaceable in lateral guides, is assigned to the upper roof part (5).

21. A convertible vehicle (1) comprising a movable vehicle roof (2) according to any one of claims 1 to 20.

## Revendications

1. Toit déplaçable pour un véhicule cabriolet (1), ledit toit pouvant être retenu sur des paliers principaux latéraux (8) de manière déplaçable par rapport à une carrosserie, et ledit toit, qui peut autrement basculer vers le haut pour son ouverture et sa fermeture dans l'ensemble, étant déplaçable au moins presque horizontalement entre une position de fermeture, dans laquelle une région avant du toit est retenue indirectement ou directement sur cadre de pare-brise (7), et une position intermédiaire, permettant le basculement du toit vers le haut et dans laquelle le toit (2) et le cadre de pare-brise (7) sont desserrés l'un de l'autre,
**caractérisé en ce que**
les paliers principaux (8) sont déplaçables au moins presque horizontalement par rapport à la carrosserie (20).

2. Toit déplaçable pour véhicule selon la revendication 1, **caractérisé en ce que** la course (H) du déplacement au moins presque horizontal est de deux à huit centimètres.

3. Toit déplaçable pour véhicule selon l'une quelconque des revendications 1 ou 2, **caractérisé en ce que** la région de toit avant est retenue sur le cadre de pare-brise (7) sans verrouillage et **en ce qu'**au moins un verrouillage est associé aux paliers principaux (8) déplaçables.

4. Toit déplaçable pour véhicule selon l'une quelconque des revendications 1 à 3, **caractérisé en ce que** la région de toit avant peut être liée au cadre de pare-brise (7) par conjugaison de forme.

5. Toit déplaçable pour véhicule selon la revendication 4, **caractérisé en ce que** des tenons (10) sont associés à la région de toit avant pour ce but, lesdits tenons (10) étant disposés sensiblement dans la direction d'extension d'un élément de toit avant (5) et pouvant s'engrener dans des creux complémentaires (11) du cadre de pare-brise (7).

6. Toit déplaçable pour véhicule selon la revendication 5, **caractérisé en ce que** les tenons (10) présentent une forme conique.

7. Toit déplaçable pour véhicule selon l'une quelconque des revendications 1 à 6, **caractérisé en ce que**, pour l'ouverture du toit (2), la course (H) dudit déplacement au moins presque horizontal à l'opposée de la direction de marche (F) est limitée par une position du toit permettant le basculement libre vers le haut de la région de toit avant sans aucun danger de collision avec le cadre de pare-brise (7).

8. Toit déplaçable pour véhicule selon l'une quelconque des revendications 1 à 7, **caractérisé en ce que** le déplacement translatoire (H) du toit et un déplacement du toit comprenant au moins une composante de basculement (S) se déroulent l'un après l'autre.

9. Toit déplaçable pour véhicule selon l'une quelconque des revendications 1 à 8, **caractérisé en ce que** le toit (2) comprend plusieurs éléments de toit rigides (3; 5), dont un élément de toit arrière (3) s'étend au moins entre une ligne de parapet de fenêtre (L) et un élément de toit (5), disposé en avant dans la direction de marche (F) et au-dessus d'un habitacle, et ledit élément (3) comprend une région centrale (S5) disposée entre des montants principaux latéraux (S4) lorsque le toit est fermé et comprenant une lunette arrière.

10. Toit déplaçable pour véhicule selon la revendication 9, **caractérisé en ce que** les montants principaux (S4) d'une part et la région centrale (S5) d'autre part sont tous articulés indépendamment à la carrosserie (20) et à l'élément de toit supérieur (5) au moyen d'articulations (S9,S10; S11,S12), qui constituent un ensemble à plusieurs articulations en vue latérale et dont les axes de rotation sont disposés dans un plan commun (E) en au moins une position de déplacement du toit (2), au moins un support additionnel (S25) étant prévu pour supporter le ou un élément de toit (5), disposé en avant de l'élément de toit arrière (3), par rapport à la carrosserie (20) et étant effectif au moins dans ladite position de déplacement.

11. Toit déplaçable pour véhicule selon la revendication 10, **caractérisé en ce que** l'ensemble à plusieurs articulations constitue un ensemble à quatre articulations (S9,S10; S11,S12).

12. Toit déplaçable pour véhicule selon l'une quelconque des revendications 10 ou 11, **caractérisé en ce que** les montants principaux (S4) d'une part et la région centrale (S5) d'autre part constituent des éléments d'un parallélogramme articulé.

13. Toit déplaçable pour véhicule selon l'une quelconque des revendications 10 à 12, **caractérisé en ce que**, pendant une étape du mouvement d'ouverture ou de fermeture du toit, les montants principaux (S4) d'une part et la région centrale (S5) d'autre part constituent une chaîne articulée en plusieurs parties (S9,S10; S11,S12), et pendant une étape du mouvement les montants principaux (S4) et le support additionnel (S25) constituent une chaîne articulée en plusieurs parties (S9,S10; S32,S33).

14. Toit déplaçable pour véhicule selon la revendication 13, **caractérisé en ce que**, pendant une étape du mouvement d'ouverture ou de fermeture du toit, les montants principaux (S4) d'une part et la région centrale (S5) d'autre part constituent un parallélogramme articulé, et pendant une étape du mouvement les montants principaux (S4) et le support additionnel (S25) constituent un parallélogramme articulé.

15. Toit déplaçable pour véhicule selon l'une quelconque des revendications 10 à 14, **caractérisé en ce que** le support additionnel (S25) supporte un/l'élément de toit avant (5) par rapport à la carrosserie (20).

16. Toit déplaçable pour véhicule selon l'une quelconque des revendications 10 à 15, **caractérisé en ce que** l'on prévoit le ou chaque support additionnel (S25) sous forme d'un guidon qui est élastique en soi ou en au moins une de ses liaisons (S32; S33).

17. Toit déplaçable pour véhicule selon l'une quelconque des revendications 10 à 16, **caractérisé en ce que** l'articulation (S11) de la région centrale (S5) à la carrosserie (20) et l'articulation (S12) de la région centrale (S5) à l'élément de toit supérieur (5) sont respectivement situées au-dessus des plans des articulations (S9; S10) respectives du montant principal (S4).

18. Toit déplaçable pour véhicule selon la revendication 17, **caractérisé en ce que** la lunette arrière (S6) est maintenue au-dessus des montants principaux (S4) à l'état ouvert.

19. Toit déplaçable pour véhicule selon l'une quelconque des revendications 10 à 18, **caractérisé en ce que** la région centrale (S5) constitue, sensiblement sur toute sa hauteur, une lunette arrière (S6).

20. Toit déplaçable pour véhicule selon l'une quelconque des revendications 10 à 19, **caractérisé en ce qu'**un corps de plaque (S13), maintenu déplaçable longitudinalement dans des guides latéraux, est associé à l'élément de toit supérieur (5).

21. Véhicule cabriolet (1) comprenant un toit déplaçable (2) selon l'une quelconque des revendications 1 à 20.
